# DEMANDE DE BREVET EUROPEEN

(11) **EP 0 755 730 A1**
(43) Date de publication de la demande: **29.01.1997**
(21) Numéro de dépôt: 96401650.5
(22) Date de dépôt: 24.07.1996
(51) Int. Cl.: B09C 1/10, B09C 1/02, A62D 3/00, C02F 11/00, C02F 9/00, C22B 3/18

(54) **Procédé de dépollution de sols et de déchets contenant des oxydes de fer et des métaux lourds**

(30) Priorité: 26.07.1995 FR 9509080
(71) Demandeur: COMMISSARIAT A L'ENERGIE ATOMIQUE, 75015 Paris (FR)
(72) Inventeur: Veglia, Patrick, 13480 Calas (FR); Besnainou, Bernard, 13100 Aix en Provence (FR); Sahut, Claire, 13090 Aix en Provence (FR); Berthelin, Jacques, 54000 Nancy (FR)
(74) Mandataire: Dubois-Chabert, Guy

(57) **Abrégé**

L'invention concerne un procédé de dépollution de sols et de déchets contenant des oxydes de fer fixant des métaux lourds. Il comprend les étapes de :
- mise en contact, dans un réacteur de solubilisation (1), des déchets et d'une source de carbone assimilable en maintenant des conditions d'anaérobiose pendant le temps nécessaire pour obtenir la solubilisation des oxydes de fer sous l'action de micro-organismes ferriréducteurs et, par conséquent, la solubilisation desdits métaux lourds,
- prélèvement dans le réacteur (1) d'une solution contenant le fer solubilisé et les métaux lourds,
- oxydation de la solution contenant le fer solubilisé et les métaux lourds pour obtenir la précipitation du fer sous forme d'hydroxydes ferriques et la coprécipitation des métaux lourds,
- séparation du précipité obtenu à l'étape précédente de la phase liquide de la solution.

## Description

La présente invention concerne un procédé de dépollution de sols et de déchets contenant des oxydes de fer et des métaux lourds.

Par l'expression "métaux lourds" on entend divers métaux polluants et toxiques incluant notamment le cuivre, le zinc, le nickel, le chrome, le cadmium, le plomb, le mercure, l'argent, le cobalt et l'uranium.

Certaines pratiques d'élimination des déchets (épandage agricole de boues résiduaires, mise en décharge de déchets urbains et industriels), ainsi que certaines activités industrielles, peuvent considérablement accroître les teneurs en métaux lourds des sols et présenter un risque de contamination des productions agricoles, des ressources en eau et, d'un point de vue plus général, des écosystèmes dans leur ensemble.

Des réglementations concernant la protection des sols de la pollution par des métaux lourds ont été établies dans de nombreux pays. Des normes de rejet relatives à la mise en décharge (se révélant de plus en plus coûteuse, voire interdite) et à l'épandage agricole des déchets ont ainsi été définies.

Ces problèmes de pollution des sols par des métaux toxiques peuvent être résolus de deux manières :
- soit directement par un traitement préventif en amont, c'est-à-dire un traitement des déchets contaminés eux-mêmes, avant mise en contact avec le sol (boues d'épuration urbaines ou industrielles, stériles miniers, cendres d'incinération, déchets divers...);
- soit par un traitement aval, curatif, permettant de réhabiliter des sols ayant déjà été exposés à des sources polluantes (terrains industriels essentiellement, terres agricoles...).

Les procédés généralement utilisés en traitement de sol concernent essentiellement les problèmes de pollution organique. Ce type de pollution peut, par exemple, être supprimé par incinération. Une autre possibilité de traitement consiste (tel est le cas du "venting") en une extraction sous vide des composés organiques volatils. Le "bioventing", quant à lui, associe le procédé précédent à une biodégradation de composés organiques en présence d'oxygène. Mais ces procédés ne sont hélas pas applicables à l'élimination d'une pollution minérale, telle que l'est une pollution par des éléments métalliques.

Dans ce dernier cas, les procédés de l'art antérieur font appel à l'utilisation d'acides, soit par apport direct exogène (acide sulfurique, citrique, chlorhydrique...), soit indirectement par la mise en oeuvre d'une activité biologique acidifiante (par exemple par production d'acide sulfurique par un ihiobacille et mise en solution des métaux sous forme de sulfates, cf. WO 92/14682). Néanmoins, on peut reprocher à de tels procédés d'acidification de ne pas convenir à certains types de boues dont le pouvoir tampon trop important (boues carbonatées) peut s'opposer à la diminution de pH attendue. Une solubilisation substantielle des métaux polluants nécessite alors la consommation de grandes quantités de réactifs, mais aussi la neutralisation, après traitement, à la fois de la solution d'extraction et du sol traité, entraînant des coûts d'exploitation élevés. En outre, certains sels métalliques obtenus par acidification sont difficilement solubles. Tel est le cas, par exemple, du plomb, de l'étain, de l'argent ou de l'antimoine qui forment en présence d'acide sulfurique des sulfates insolubles ou peu solubles (voir l'ouvrage "Metal Extraction by Bacterial Oxidation of Minerals" par Barret et al., 1993, édité par Ellis Horwood ; pp. 28-29).

Un procédé biologique mettant en oeuvre l'activité d'une bactérie manganiréductrice (Bacillus polymyxa) permet de traiter des minerais d'argent manganifères (cf. US-A-5 055 130). L'argent, initialement renfermé dans des gangues de manganèse est inaccessible aux attaques chimiques conventionnelles devant conduire à sa solubilisation. Après réduction bactérienne du manganèse, il peut être attaqué par les techniques conventionnelles de cyanuration. Selon le même principe, ce procédé a été conduit en employant une souche bactérienne sensiblement différente (désignée par les chercheurs : Bacillus MBX 69) afin d'extraire l'argent de minerai d'argent manganifère, puis étendu à l'extraction des métaux lourds (cf. WO 92/14848).

Les inconvénients de ce type de procédé en matière de dépollution sont les suivants :
- Il nécessite la présence de manganèse en quantité suffisante. Cette condition non remplie par la majorité des sols (Mn = 0,1% des constituants de la croûte terrestre) limite les possibilités du traitement aux seuls minerais manganifères.
- Il préconise l'utilisation de techniques telles que la cyanuration ou l'extraction des métaux au kérosène, qui peuvent représenter un risque supplémentaire de pollution de l'environnement venant se substituer au risque initial de rejet de métaux toxiques.
- La mise en oeuvre de la souche bactérienne MBX 69, qui se développe par ailleurs de façon satisfaisante sur les minerais manganifères, peut se révéler inopérante sur un milieu plus agressif dont la teneur en métaux toxiques est élevée (mauvaise adaptation).
- Par ailleurs, le procédé prévoit en remplacement de la souche MBX 69, l'emploi de souches batériennes génétiquement transformées. Mais l'utilisation de ces souches est réglementée (tout au moins en France) et ne peut être conduite sans précautions particulières destinées à empêcher toute dissémination de tels organismes dans le milieu naturel. Dès lors, le confinement obligatoire des matériaux à dépolluer interdit toute possibilité de traitement in situ. De plus, la nécessité d'une stérilisation coûteuse de ces matériaux, une fois traités, pourrait entraver le développement d'une telle démarche.

Comparés aux traitements chimiques, il apparaît toutefois que les traitements biologiques présentent généralement un certain nombre d'avantages liés à l'utilisation de réactifs non dangereux pour l'environnement, à la possibilité de conduire un traitement in situ, et au déploiement d'un large éventail d'actions en direction d'un large spectre de polluants.

Afin de remédier aux inconvénients des procédés de l'art antérieur tout en bénéficiant des avantages procurés par les traitements biologiques, on propose un procédé dont le principe repose essentiellement sur deux processus complémentaires de réduction et d'oxydation permettant de solubiliser et de récupérer les métaux polluants présents dans des déchets contenant du fer (boues d'épuration des eaux, sols et sédiments pollués, minerai, cendres, etc..). Les déchets pollués par des métaux lourds sont additionnés d'une solution carbonée, éventuellement enrichie en éléments minéraux. Cet apport de réactif permet à une activité biologique, conduisant à la réduction du fer, de s'instaurer au sein du déchet traité. La solubilisation des oxydes de fer par réduction, s'accompagne de la mise en solution des métaux lourds polluants. Parallèlement une baisse de pH et une production d'acides organiques complexants, viennent participer à la solubilisation des métaux et à leur maintien en solution. Les lixiviats chargés en métaux lourds sont récoltés et réoxydés afin de récupérer un résidu métallique pouvant être soit recyclé, soit considéré comme un déchet ultime. Les matériaux traités, une fois dépollués, sont dirigés vers les filières classiques d'élimination ou de valorisation des déchets.

L'invention a donc pour objet un procédé de dépollution de sols et de déchets contenant des oxydes de fer fixant des métaux lourds, caractérisé en ce qu'il comprend les étapes de :
- mise en contact, dans un réacteur de solubilisation des déchets et d'une source de carbone assimilable en maintenant des conditions d'anaérobiose pendant le temps nécessaire pour obtenir la solubilisation des oxydes de fer sous l'action de micro-organismes ferriréducteurs et, par conséquent, la solubilisation desdits métaux lourds,
- prélèvement dans le réacteur d'une solution contenant le fer solubilisé et les métaux lourds,
- oxydation de la solution contenant le fer solubilisé et les métaux lourds pour obtenir la précipitation du fer sous forme d'hydroxydes ferriques et la coprécipitation des métaux lourds,
- séparation du précipité obtenu à l'étape précédente de la phase liquide de la solution.

L'invention sera mieux comprise et d'autres avantages et particularités apparaîtront à la lecture de la description qui va suivre, donnée à titre d'exemple non limitatif, accompagnée des dessins annexés parmi lesquels :

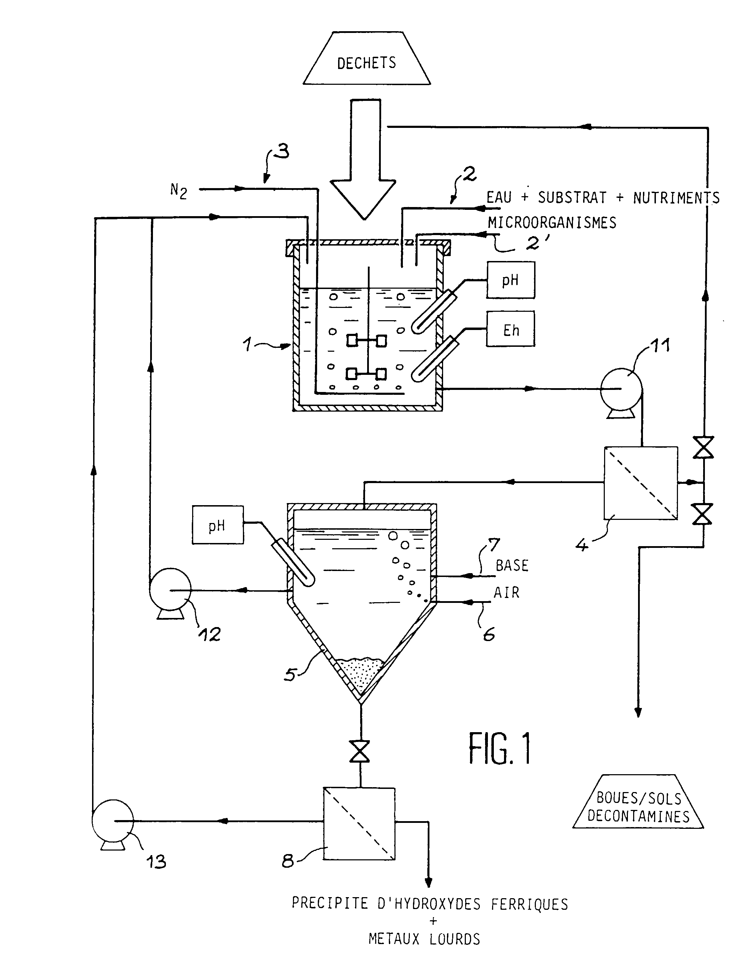

- la figure 1 représente, de manière schématique, les différentes étapes du procédé selon l'invention,
- la figure 2 représente un graphe illustrant la cinétique de dissolution du fer par une souche ferriréductrice sélectionnée.

Le fer, qui se place au quatrième rang des éléments de la croûte terrestre, joue un rôle prépondérant quant à la fixation et l'immobilisation des métaux lourds dans les sols. Présent sous forme d'oxydes, il s'organise en nodules, concrétions, ou pellicules à la surface des particules du sol, et, constitue parfois un ciment, liant ces particules entre elles. Ces oxydes de fer, par leurs multiples charges de surface, négatives dans les conditions de pH généralement rencontrées dans la nature, adsorbent de grandes quantités de métaux lourds et en incorporent au sein de leur structure.

Le mode d'action du procédé de dépollution selon l'invention est basé en partie sur la dissolution de ces oxydes de fer, afin d'en libérer les métaux lourds qui leur sont associés.

Ce procédé selon l'invention, qui permet de dépolluer des déchets chargés en métaux lourds et contenant du fer (boues d'épuration floculées au fer, sédiments, sols ferrifères, minerais, cendres d'incinération), se présente de la manière suivante,

Les déchets à traiter (boues, sols pollués) sont placés dans un réacteur de solubilisation 1, de type fermé ou continu, se présentant sous forme d'une cuve, d'un réacteur agité, d'une colonne de lixiviation, etc... En 2, une solution carbonée (sucres) ou tout autre forme de carbone assimilable (résidus de l'industrie agro-alimentaire, eaux usées, etc...) éventuellement additionnée d'eau, est apportée aux déchets à dépolluer, à moins que ceux-ci ne contiennent déjà dans leurs composants une source de carbone assimilable. En 2, l'eau utilisée peut être éventuellement enrichie en éléments minéraux (N, P, K, S).

Le mélange contenu dans le réacteur est maintenu en conditions d'anaérobiose, si besoin au moyen d'un système 3 d'injection de gaz (N₂, CO₂,...) destiné à chasser l'oxygène résiduel et ce pendant un temps suffisant pour obtenir une solubilisation suffisante des métaux à extraire. L'injection d'hydrogène par le système 3 peut être envisagée pour favoriser la réduction du fer. Dans le réacteur 1, les valeurs initiales de pH se situent préférentiellement au-dessous ou au voisinage de pH 7. Sous ces conditions, l'apport de la solution carbonée (ou de carbone insoluble et d'eau) favorise l'établissement d'une forte activité ferriréductrice à partir de micro-organismes endogènes, c'est-à-dire présents dans le déchet à traiter.

L'activation de ces micro-organismes endogènes, ainsi réalisée, présente un intérêt certain, par rapport à la mise en oeuvre de micro-organismes de provenance extérieure ou exogènes que l'on pourrait introduire en 2'. En effet, les micro-organismes endogènes sont déjà adaptés à un environnement risquant fortement, par la présence de métaux lourds en concentrations élevées, de se révéler toxique envers des micro-organismes exogènes.

L'activité bactérienne ferriréductrice qui se développe à l'intérieur du réacteur (différentes espèces de Clostridium glucidolytiques tels que Clostridium aurantibutyricum, de Bacillus, etc...) a trois effets agissant simultanément en faveur de la solubilisation des métaux lourds :
- réduction et solubilisation des oxydes de fer,
- production de protons et/ou acidification,
- production d'acides organiques complexant les métaux.

La réduction des oxydes de fer provoque leur dissolution (Fe III insoluble + e⁻→ Fe II soluble) et de ce fait la mise en solution des métaux lourds qui leur sont associés. L'augmentation de la teneur en protons des déchets, entraîne soit une diminution de pH responsable d'une désorption des cations métalliques, soit une dissolution de leurs constituants acido-solubles libérant les métaux y étant fixés. La production d'acides organiques complexants (essentiellement acide acétique et acide butyrique) quant à elle, favorise l'échange d'ions et le maintien en solution des métaux solubilisés par les deux mécanismes de réduction et de production de protons précédemment cités. Les risques de reprécipitation des métaux dissous sont ainsi limités.

L'utilisation d'inhibiteurs de voies métaboliques secondaires peut être envisagée pour favoriser la réduction bactérienne du fer.

Les lixiviats chargés en métaux lourds sont soutirés du réacteur 1 grâce à une pompe 11, recueillis par un système filtrant 4 et sont dirigés vers un décanteur 5.

Dans le décanteur 5, l'oxydation des lixiviats par injection d'air, d'oxygène ou de tout autre réactif oxydant en 6 provoque l'oxydation du fer ferreux soluble en fer ferrique insoluble qui précipite en coprécipitant les métaux lourds dissous. Le cas échéant, l'ajout d'une base en 7 peut être envisagé pour neutraliser les lixiviats ou compléter la précipitation des métaux en ajustant le pH à des valeurs supérieures ou égales à 7.

Le résidu se formant dans le décanteur et consistant en une boue métallique concentrée (fer + métaux lourds) est ensuite déshydraté dans un dispositif 8 de type filtration, centrifugation, etc. Le produit obtenu est constitué d'un précipité d'hydroxydes ferriques et de métaux lourds. Il peut être alors, selon la valeur des métaux qu'il renferme, soit recyclé, soit considéré comme un déchet ultime.

Les effluents résultant de l'épuration des lixiviats (dans le décanteur 5 et le dispositif de déshydratation 8) sont éventuellement recyclés dans le réacteur de solubilisation 1 grâce aux pompes 12 et 13.

Les déchets dépollués (métaux toxiques solubilisés et extraits), obtenus en sortie de réacteur, sont, après passage dans le système filtrant 4 ayant soutiré la phase liquide, évacués sous forme d'une phase solide. Celle-ci constituée des déchets initiaux débarassés de leurs éléments polluants, ne présente alors plus de risque de toxicité pour l'environnement et peut être dirigée vers les filières classiques d'élimination ou de valorisation des déchets. Les déchets dépollués et évacués sous forme d'une phase solide peuvent également être renvoyés dans le réacteur 1 si l'on estime qu'ils contiennent encore trop de métaux toxiques.

Les deux exemples qui suivent sont destinés à montrer l'efficacité de l'action ferriréductrice de souches bactériennes.

### EXEMPLE 1 : Dissolution du fer par une souche ferriréductrice sélectionnée.

Une souche bactérienne ferriréductrice (Clostridium sp.) est isolée à partir d'un sol. Pour cela, afin de favoriser le développement d'une activité ferriréductrice, le sol humide est placé en condition anaérobie pendant une dizaine de jours. A partir de ce sol, des ensemencements "en grains de terre" sont réalisés sur milieu gélosé contenant du fer ferrique insoluble ((NH₄)₂SO₄ : 1g/l, KH₂PO₄ : 0,5 g/l, MgSO₄, 7H₂O : 0,5 g/l, extrait de levure : 0,15 g/l, glucose : 10 g/l, Fe₂O₃,H₂O : 1 g/l, CaCO₃ : 5 g/l, agar : 13 g/l, eau distillée : q.s.p. 1 l, traitement à l'autoclave : 20 min à 110°C).

Après 3 à 5 jours de culture (condition anaérobie), les bactéries ferriréductrices croissant sur la gélose peuvent être visualisées par des halos décolorés qui les entourent. En effet, à proximité des souches ferriréductrices, le milieu gélosé de couleur rouge brique perd sa coloration par réduction du fer (III) en fer (II) incolore. Ces souches, récupérées, isolées et purifiées par des techniques classiques de culture microbienne peuvent être cultivées isolément sur un milieu liquide de même composition que le milieu précité afin d'étudier leurs capacités de dissolution du fer en milieu synthétique.

Des flacons septés contenant le milieu de culture sont désoxygénés par bullage d'azote, ensemencés en bactéries et placés à température ambiante.

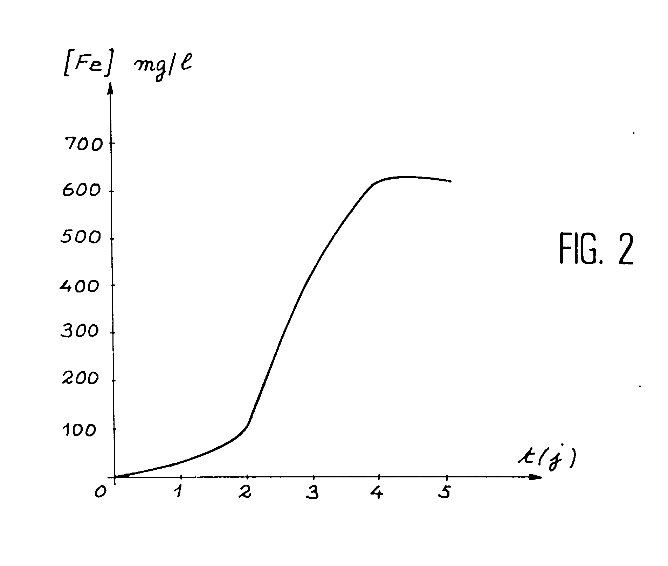

Des échantillons de liquide sont prélevés pendant la durée de la culture et aussitôt filtrés à 0,45 µm puis acidifiés à pH<1,5. Le fer solubilisé par l'activité bactérienne est dosé par spectrométrie d'absorption atomique. Après 4 jours, les milieux sont incolores et la totalité du fer est passée en solution. Une cinétique de dissolution du fer ainsi obtenu est représentée par le graphe de la figure 2 où l'axe des ordonnées représente la concentration en fer dissous et l'axe des abscisses représente le temps t en jours (j).

### EXEMPLE 2 : Dissolution du fer et de métaux lourds par une bactérie endogène glucidolytique : Clostridium.

Selon le procédé décrit, des boues provenant d'une station d'épuration d'eaux industrielles sont traitées en réacteur fermé. Les boues (500 g de matière sèche) sont mélangées à une solution contenant 100 g de glucose. Après 20 jours de solubilisation, la phase liquide renfermant les métaux dissous est séparée par filtration de la phase solide. Le lixiviat ainsi obtenu est ajusté à pH 7, et soumis à une oxydation par bullage à l'air pendant 24 heures afin de provoquer la précipitation du fer sous forme d'hydroxydes ferriques et la coprécipitation des métaux lourds.

Le tableau 1 ci-dessous donne les résultats de cet essai.

**Tableau 1**

| Eléments métalliques | Concentration (mg/kg) dans les boues non traitées | Quantités de métaux extraits et précipités en mg/kg de boues traitées |
|---|---|---|
| Fe | 40 600 | 11 000 (27%) |
| Zn | 6 000 | 3 000 (50%) |
| Ni | 220 | 42 (19%) |
| Cd | 10 | 4 (40%) |

Une quantité identique de boues traitée dans les mêmes conditions opératoires, avec une solution renfermant 150 g de glucose donne les résultats répertoriés dans le tableau 2 suivant :

**Tableau 2**

| Eléments métalliques | Concentration (mg/kg) dans les boues non traitées | Quantités de métaux extraits et précipités en mg/kg de boues traitées |
|---|---|---|
| Fe | 40 600 | 16 500 (40%) |
| Zn | 6 000 | 4 300 (72%) |
| Ni | 220 | 64 (29%) |
| Cd | 10 | 5,5 (55%) |

## Revendications

1. Procédé de dépollution de sols et de déchets contenant des oxydes de fer fixant des métaux lourds, caractérisé en ce qu'il comprend les étapes de :
- mise en contact, dans un réacteur de solubilisation (1), des déchets et d'une source de carbone assimilable en maintenant des conditions d'anaérobiose pendant le temps nécessaire pour obtenir la solubilisation des oxydes de fer sous l'action de micro-organismes ferriréducteurs et, par conséquent, la solubilisation desdits métaux lourds,
- prélèvement dans le réacteur (1) d'une solution contenant le fer solubilisé et les métaux lourds,
- oxydation de la solution contenant le fer solubilisé et les métaux lourds pour obtenir la précipitation du fer sous forme d'hydroxydes ferriques et la coprécipitation des métaux lourds,
- séparation du précipité obtenu à l'étape précédente de la phase liquide de la solution.

2. Procédé selon la revendication 1, caractérisé en ce que, au cours de la mise en contact des déchets et de la source de carbone assimilable, on introduit des éléments minéraux dans le réacteur de solubilisation (1).

3. Procédé selon la revendication 2, caractérisé en ce que les éléments minéraux sont choisis dans le groupe constitué par les éléments N, P, K, S.

4. Procédé selon l'une quelconque des revendications 1 à 3, caractérisé en ce que lesdites conditions d'anaérobiose sont maintenues par injection dans le réacteur de solubilisation (1) d'un gaz destiné 5 à en chasser l'oxygène subsistant.

5. Procédé selon la revendication 4, caractérisé en ce que le gaz destiné à chasser l'oxygène subsistant dans le réacteur de solubilisation est choisi parmi N₂ et CO₂.

6. Procédé selon la revendication 5, caractérisé en ce que le gaz destiné à chasser l'oxygène comprend en outre de l'hydrogène.

7. Procédé selon l'une quelconque des revendications 1 à 6, caractérisé en ce que les micro-organismes ferriréducteurs sont endogènes aux déchets.

8. Procédé selon l'une quelconque des revendications 1 à 6, caractérisé en ce que les micro-organismes ferriréducteurs sont exogènes aux déchets.

9. Procédé selon l'une quelconque des revendications 1 à 8, caractérisé en ce que les micro-organismes sont choisis parmi différentes espèces de Clostridium glucidolytiques et de Bacillus.

10. Procédé selon l'une quelconque des revendications 1 à 9, caractérisé en ce que le prélèvement de la solution dans le réacteur se fait par lixiviation.

11. Procédé selon l'une quelconque des revendications 1 à 10, caractérisé en ce que la solution prélevée par le réacteur (1) passe d'abord par un système filtrant (4), puis est dirigée vers un décanteur (5).

12. Procédé selon la revendication 11, caractérisé en ce que l'étape d'oxydation est effectuée dans le décanteur (5).
